# EUROPÄISCHE PATENTSCHRIFT

(11) **EP 0 563 439 B1**
(45) Veröffentlichungstag und Bekanntmachung des Hinweises auf die Patenterteilung: **03.01.1996**
(21) Anmeldenummer: 92117663.2
(22) Anmeldetag: 16.10.1992
(51) Int. Cl.: F16J 15/32, F16J 15/16

(54) **Dichtung für eine hin- und hergehende Stange**
Sealing for a reciprocating rod
Joint d'étanchéité pour tige coulissante

(30) Priorität: 31.03.1992 DE 4210540
(43) Veröffentlichungstag der Anmeldung: 06.10.1993
(73) Patentinhaber: Firma Carl Freudenberg, D-69469 Weinheim (DE)
(72) Erfinder: Schumacher, Herbert, W-6946 Gorxheimertal (DE); Trauth, Werner, W-6940 Weinheim/Bergstr. (DE); Ehmsen, Roland, W-6940 Weinheim/Bergstr. (DE)

(56) Entgegenhaltungen:
- GB-A- 1 041 817
- GB-A- 2 207 486
- US-A- 4 053 166

## Beschreibung

Die Erfindung betrifft eine Dichtungsanordnung mit einer druckbeaufschlagbaren Dichtung, die in einem Spalt zwischen einer hin- und hergehenden Stange und einem die Stange in einem radialen Abstand umschließenden Gehäuse angeordnet ist, bestehend aus einem in das Gehäuse einfügbaren, rotationssymmetrischen Dichtring aus gummielastischem Werkstoff, der an seinem mit einem Medium höheren Druckes beaufschlagten ersten Ende mit wenigstens einer an die Stange anlegbaren, in radialer Richtung beweglichen Dichtlippe und an dem davon abgewandten zweiten Ende mit einer in Richtung der Stange und in Richtung des zweiten Endes offenen Ausnehmung versehen ist, in die ein Ring eines angepaßten Profils aus zähhartem, polymerem Werkstoff eingefügt ist, wobei der Ring als Führungsring ausgebildet ist und in einem Abstand von dem zweiten Ende mit wenigstens einem radial nach außen weisenden Vorsprung versehen ist, der in eine radial nach innen offene Nut der Ausnehmung einschnappbar ist.

Eine solche Dichtung ist aus der GB-A-104 1817 bekannt. Der Dichtring ist im wesentlichen C-förmig ausgebildet und in einer Nut angeordnet, die durch ein zweiteiliges Gehäuse gebildet ist. Im Bereich des ersten Endes des Dichtrings sind vier Dichtlippen angeordnet, wobei eine der Dichtlippen die abzudichtende Stange anliegend berührt. Die drei anderen Dichtlippen berühren die Begrenzungswandungen der Nut unter elastischer Vorspannung, wobei der Dichtring in seiner Gesamtheit in radialer Richtung innerhalb der Nut beweglich angeordnet ist. Im Bereich seines zweiten Endes weist der Dichtring radial innenund außenseitig jeweils einen Führungsring auf, die mit dem elastomeren Werkstoff des Dichtrings verbunden sind.

Eine weitere Dichtungsanordnung ist aus der DE-PS 32 45 338 bekannt. Der aus zähhartem Kunststoff bestehende Backring hat ein an die Form der ihn aufnehmende Ausnehmung des Dichtringes angepaßtes Profil. Er wird dem Verwender unabhängig von dem eigentlichen Dichtring zur Verfügung gestellt, was die Montage einer solchen Dichtung erschwert.

Der Erfindung liegt die Aufgabe zugrunde, eine Dichtungsanordnung der eingangs genannten Art derart weiterzuentwickeln, daß der Halteabschnitt in radialer und axialer Richtung relativ unbeweglich innerhalb des Gehäuses gehalten ist und daß die Dichtlippe eine gute Beweglichkeit in radialer Richtung aufweist.

Diese Aufgabe wird erfindungsgemäß bei einer Dichtungsanordnung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Dichtungsanordnung ist es vorgesehen, daß der Dichtring einen Halteabschnitt aufweist, der in dem Zwischenraum zwischen dem Führungsring und dem Gehäuse zumindest im Bereich eines umlaufenden Dichtbandes radial verpreßt ist, daß der Halteabschnitt ein Profil aufweist, das an zumindest einer Stelle mit einem radial nach außen weisenden Ringsvorsprung versehen ist, daß der Ringsvorsprung im Bereich der Mündung des Gehäuses angeordnet ist und daß das Gehäuse im Bereich seiner Mündung einen entsprechend vergrößerten Durchmesser zur Aufnahme des Ringvorsprungs aufweist, daß die Profile des Halteabschnitts am zweiten Ende des übrigen Dichtrings mit der Dichtlippe am ersten Ende durch ein gelenkartig wirkendes Zwischenstück verbunden sind und daß der Ringvorsprung in eine Nut des Gehäuses eingefügt ist, die sein Profil unter radialer und axialer Vorspannung anliegend umschließt. Der Dichtring und der Führungsring sind hierdurch während des Tranports und Montage unverlierbar aneinander festgelegt, was die Verwendung der erfindungsgemäßen Dichtung wesentlich vereinfacht. Das Gehäuse und der Führungsring können als im wesentlichen unnachgiebig betrachtet werden, während der den Dichtring bildende, elastomere Werkstoff im wesentlichen inkompressibel ist. Aus der radialen Verpressung des Dichtrings innerhalb der durch das Dichtband gebildeten Zone resultiert daher einerseits eine dauerhaft ausgezeichnete Abdichtung des Dichtrings gegenüber dem abschließenden Gehäuse und andererseits eine präzise Justierung des Führungsrings in Bezug auf das Gehäuse. In Bezug auf die Erzielung einer langen Gebrauchsdauer ist das von großem Vorteil.

Der Halteabschnitt weist ein Profil auf, das an zumindest einer Stelle mit einem radial nach außen weisenden Ringvorsprung versehen ist. Hinsichtlich der Möglichkeiten, eine besonders hochgradige Verpressung des Halteabschnitts zwischen dem Gehäuse und dem Führungsring zu erzielen, ist das von großem Vorteil.

Die Profile des Halteabschnitts und des übrigen Dichtrings sind durch ein gelenkartig wirkendes Zwischenstück verbunden. Trotz der hochgradigen Verpressung des Halteabschnitts zwischen dem Gehäuse und dem Führungsring ergibt sich bei einer solchen Ausbildung keine Beeinträchtigung der radialen Beweglichkeit der mit der abzudichtenden Stange in Eingriff stehenden, dynamischen Dichtung. Das mit der erfindungsgemäßen Dichtung erzielte Abdichtungsergebnis ist daher auch dann von hoher Qualität, wenn sich eine Verkantung der abzudichtenden Stange ergibt, beispielsweise als Folge schräg eingeleiteter Kräfte. Das Zwischenstück wird durch eine Einschnürung des Profils des Dichtrings gebildet.

Der Ringvorsprung ist in eine Nut des Gehäuses eingefügt, das sein Profil unter radialer und axialer Vorspannung anliegend umschließt. Es resultiert bei einer solchen Ausbildung eine axial unverrückbare Festlegung des Ringvorsprungs und damit des Dichtrings in dem aufnehmenden Gehäuse. Sekundärer Maßnahmen bedarf es daher hierzu nicht.

Die Nut kann auf der von dem druckbeaufschlagten Medium abgewandten Seite durch einen nach innen weisenden Flanschvorsprung des Gehäuses begrenzt sein, wobei der Flanschvorsprung den Dichtring und den Führungsring zumindest teilweise mit einer Radialfläche anliegend berührt. Hierdurch läßt sich auf besonders einfache Weise eine präzise gegenseitige Zuordnung des Dichtrings zu dem Führungsring und zu der Nut gewährleisten.

Der Flanschvorsprung kann aus einem umgebördelten Abschnitt der Wandung des Gehäuses bestehen, was seine Herstellung in der Massenproduktion vereinfacht.

Der radial nach außen weisende Vorsprung des Führungsrings kann einen sich mit zunehmender Entfernung von seinem Ende gleichmäßig vergrößernden Durchmesser haben, um einer Entstehung von inneren Vorspannungen in dem die dynamischen Dichtlippen tragenden Bereich vorzubeugen. Zusätzlich resultiert eine besonders präzise Festlegung des Führungsrings in Bezug auf das umschließende Gehäuse.

Als zweckmäßig hat es sich erwiesen, wenn der Halterabschnitt während der bestimmungsgemäßen Verwendung auf dem überwiegenden Teil seiner axialen Länge einerseits von dem Gehäuse und andererseits von dem Führungsring anliegend berührt wird, so daß sich eine möglichst große, axiale Ausdehnung des Dichtbandes ergibt. Relaxationsbedingten Ausfallerscheinungen läßt sich hierdurch begegnen.

Die erfindungsgemäße Dichtung eignet sich in hervorragender Weise zur Abdichtung von hin- und hergehenden Stangen aus dem Bereich der Pneumatik und Hydraulik. Bevorzugte Anwendungen finden sich in Gasdruckfedern und Stoßdämpfern.

Der Gegenstand der Erfindung wird nachfolgend anhand der Zeichnungen weiter verdeutlicht. Es zeigen:

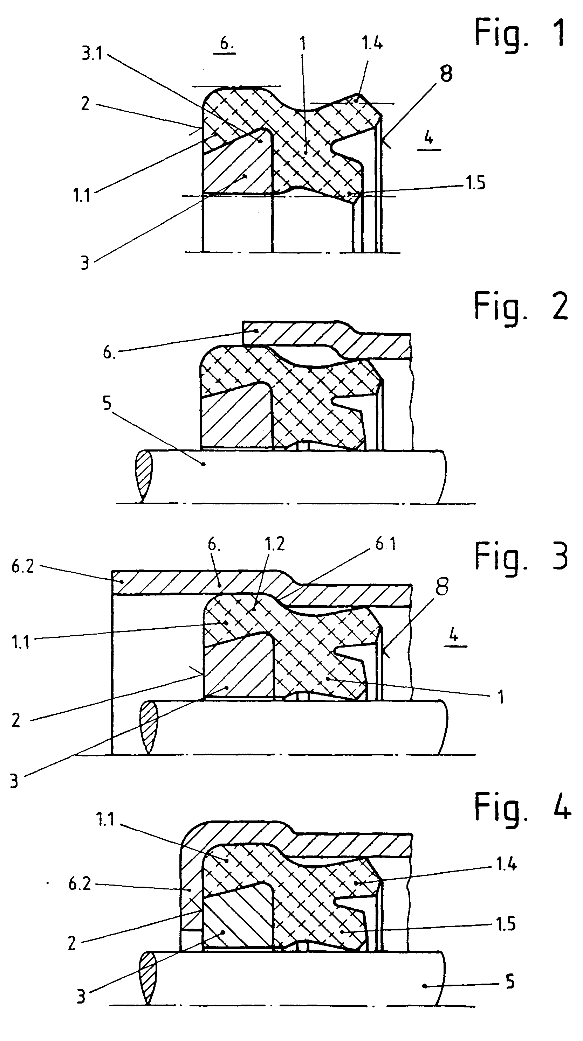

Figur 1 in halbgeschnittener Darstellung eine beispielhafte Ausführungsform der Dichtung in dem Zustand, in dem sie zur Auslieferung gelangt. Die Dichtung ist für die Abdichtung des Spalts zwischen einer hin- und hergehenden Stange gegenüber einem umschließenden Gehäuse bestimmt. Sie besteht aus einem in das Gehäuse einfügbaren, rotationssymmetrischen Dichtring 1 aus gummielastischem Werkstoff der an seinem mit einem Medium 4 höheren Drucks beaufschlagten Ende 8 mit wenigstens einer an die Stange anlegbaren Dichtlippe 1.5 und an dem davon abgewandten Ende 2 mit einer in Richtung der Stange und in Richtung des Endes offenen Ausnehmung versehen ist, in die ein Ring eines angepaßten Profils aus zähhartem, polymerem Werkstoff eingefügt ist. Der Ring ist als Führungsring 3 ausgebildet und in einem Abstand von dem Ende 2 mit einem radial nach außen weisenden Vorsprung 3.1 versehen, der in eine radial nach innen offene Nut der Ausnehmung des Dichtrings 1 einschnappbar ist, wobei der Dichtring 1 einen Halteabschnitt 1.1 aufweist, der während der bestimmungsgemäßen Verwendung in dem Zwischenraum zwischen dem Führungsring 3 und dem in Figur 1 nicht gezeigten Gehäuse 6 zumindest im Bereich eines umlaufenden Dichtbandes radial verpreßt ist.

Figur 2 verdeutlicht das Einfügen der Dichtung gemäß Figur 1 in den abzudichtenden Spalt zwischen einem Gehäuse 6 und einer darin gelagerten, parallel zu ihrer Achse hin- und herbewegbaren Stange 5. Das Gehäuse 6 besteht aus einem Rohr aus Stahlblech, welches im Bereich seiner Mündung auf einen relativ vergrößerten Durchmesser entsprechend der Darstellung aufgeweitet ist. Die Zuordnung der Dichtung zu dem aufgeweiteten Bereich im Anschluß an das Einfügen wird durch Figur 3 verdeutlicht. Sie ist dadurch gekennzeichnet, daß sich eine radiale Verpressung des Halteabschnitts 1.1 zwischen dem im wesentlichen unnachgiebigen Führungsring 3 und dem im wesentlichen unnachgiebigen Gehäuse 6 ergibt. Der Halteabschnitt 1.1 ist mit einem in radialer Richtung nach außen weisenden Ringvorsprung 1.2 versehen. Dieser berührt eine Schulter 6.1 des Gehäuses in axialer Richtung, wodurch eine noch weitergehende Verschiebung der Dichtung in Richtung des abzudichtenden Raums 4 ausgeschlossen ist. Das in entgegengesetzter Richtung über das Ende 2 der Dichtung 1 überstehende Ende 6.2 des Gehäuses 6 wird anschließend in radialer Richtung nach innen umgelegt, wie in Figur 4 gezeigt.

Eine entsprechende Umformung des Endes 6.2 kann beispielsweise durch einen Bördel- oder einen Rollvorgang bewirkt werden. Der entsprechende Umformungsprozess wird so lange fortgesetzt, bis sich eine fest anlegende Anpressung des Endes 6.2 an das stirnseitige Ende 2 des Halteabschnitts 1.1 und des Führungsrings 3 ergibt. Der Halteabschnitt 1.1 und der Führungsring 3 berühren einander mit übereinstimmend dimensionierten kegeligen Flächen, die einen sich von dem Ende 2 ausgehend vergrößernden Durchmesser haben. Hierdurch wird beim Umlegen des Endes 6.2 des Gehäuses 6 eine Art hydraulischer Effekt in dem elastisch verformbaren, jedoch inkompressiblen Halteabschnitt 1.1 bewirkt. Die hochgradige radiale Verpressung des Profils des Halteabschnitts 1.1 zwischen dem unnachgiebigen Führungsring 3 und dem unnachgiebigen Gehäuse 6 bleibt dadurch langfristig erhalten.

Das Profil des Dichtrings 1 ist zwischen dem Halteabschnitt 1.1 und den übrigen Bereichen mit einer gelenkartig wirkenden Einschnürung versehen. Die hochgradige, radiale Verpressung des Halteabschnitts 1 führt dadurch nicht zu einer nennenswerten Beeinträchtigung der radialen Beweglichkeit der Dichtlippen 1.4 und 1.5. Sowohl in Bezug auf die Innenseite des abzudichtenden Gehäuses 6 als auch in Bezug auf die Oberfläche der axial hin und her beweglichen Stange wird dadurch ein ausgezeichnetes Abdichtungsergebnis erzielt.

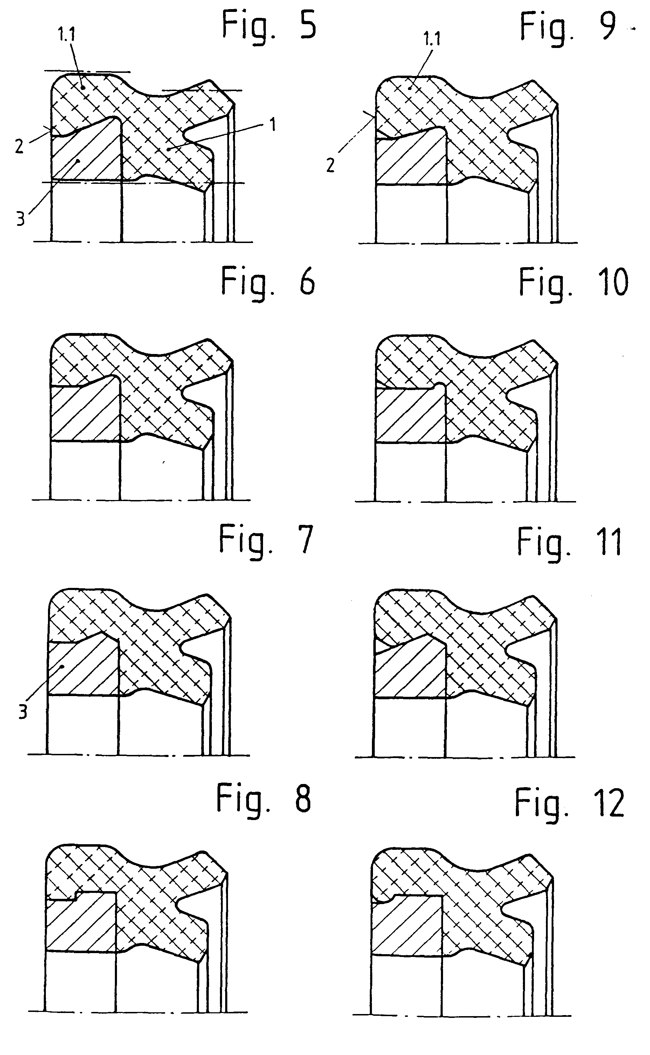

In den Figuren 5 bis 12 werden abweichend gestaltete Bauformen von Dichtungen gezeigt, die nach dem vorstehend beschriebenen Konstruktionsprinzip aufgebaut und ähnlich montierbar sind. Den Ausführungen ist gemeinsam, daß der Führungsring 3 durch einfaches Einknüpfen in die Nut der Ausnehmung unverlierbar an dem Dichtring 1 festgelegt ist und daß die aus dem Führungsring 3 und dem Dichtring 1 bestehende Liefereinheit im wesentlichen die Gestalt aufweist, die sich während der bestimmungsgemäßen Verwendung ergibt.

Der Halteabschnitt 1.1 und der Führungsring 3 berühren einander bei der Ausführung nach Figur 5 mit Berührungsflächen, die mit zunehmender Entfernung von dem Ende 2 einen zunehmend größer werdenden Steigungswinkel haben.

Bei der Ausführung nach Figur 6 ist die entsprechende Fläche in zwei unterschiedlich gestaltete Teilabschnitte unterteilt. An einen ersten, unmittelbar an das Ende 2 anschließenden, zylindrischen Teilbereich schließt sich ein zweiter Teilbereich an, der anfänglich kegelig gestaltet ist und schließlich abgerundet in die gegenüberliegende, axiale Begrenzungsfläche des Führungsrings 3 übergeht.

Bei der Ausführung nach Figur 7 schließt sich an einen von dem Ende 2 ausgehenden, zylindrischen Bereich ein abgerundeter Bereich an, der in eine erste Kegelfläche übergeht. Diese ist durch eine zweite Kegelfläche von entgegengesetzter Neigungsrichtung begrenzt, die an dem gegenüberliegenden Ende des Führungsrings 3 endet.

Bei der Ausführung nach Figur 8 wird die Fläche durch zwei zylindrische Teilbereiche eingenommen, die sich durch einen abgestuft vergrößernden Durchmesser voneinander unterscheiden.

Die Ausführung nach Figur 9 unterscheidet sich von der Ausführung nach Figur 1 dadurch, daß der Halteabschnitt 1.1 in seinem dem Ende 2 zugewandten Bereich innenseitig angefast ist, wodurch sich ein kleiner Freiraum ergibt und eine gewisse Federungsmöglichkeit des Halteabschnitts 1.1 im Anschluß an die Montage (Figur 2 bis 4). Einer Überbeanspruchung des Werkstoffkörpers während der Montage läßt sich hierdurch begegnen.

Die Figuren 10 und 11 zeigen Varianten der Figuren 6 und 7, die entsprechend den Ausführungen in Figur 9 modifiziert sind.

Figur 12 zeigt eine Ausführung, bei der der Führungsring außenseitig durch zwei in axialer Richtung aufeinander folgende Zylinderflächen begrenzt ist, von denen die an das Ende 2 anschließende Zylinderfläche des vergleichsweise kleineren Durchmessers im Bereich der Ubergangszone abgerundet endet. In die hierdurch gebildete Ausnehmung greift ein radial nach innen vorstehender Wulst des Halteabschnitts 1.1 ein, der ein abgerundetes Profil hat.

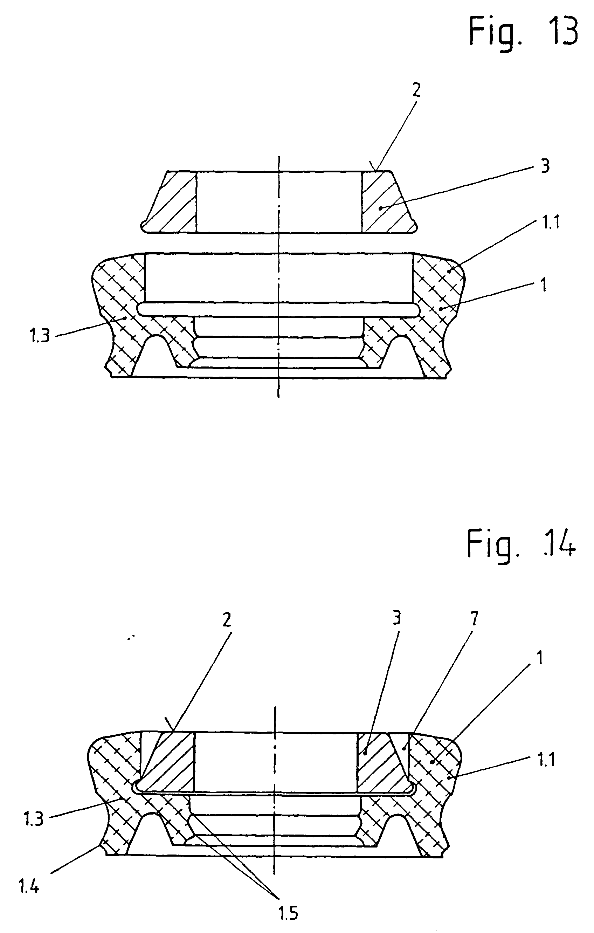

In Figur 13 ist eine Dichtung in ganzgeschnittener Darstellung vor der Vereinigung des Führungsrings 3 mit dem Dichtring 1 wiedergegeben. Der Dichtring 1 weist zwei in axialer Richtung aufeinander folgende, dynamisch wirkende Dichtlippen 1.5 auf sowie eine statische Dichtlippe 1.4, die in radialer Richtung nach außen vorspringt.

In den Figuren 13 bis 16 wird die Montage einer alternativen Ausführungsform der Dichtung gezeigt, bei der die Dimensionierung des Halteabschnitts 1.1. und des Führungsrings 3 so vorgenommen worden ist, daß sich im Anlieferungszustand der Dichtung zwischen beiden Elementen eine Spaltbildung im Bereich des Endes ergibt. Diese wird durch Figur 14 verdeutlicht.

In Figur 14 wird die Dichtung gemäß Figur 13 nach dem Einfügen des Führungsrings 3 in den Dichtring 1 gezeigt. Der sich im Bereich des Halteabschnitts zwischen beiden Teilen ergebende Spalt 7 ist erkennbar.

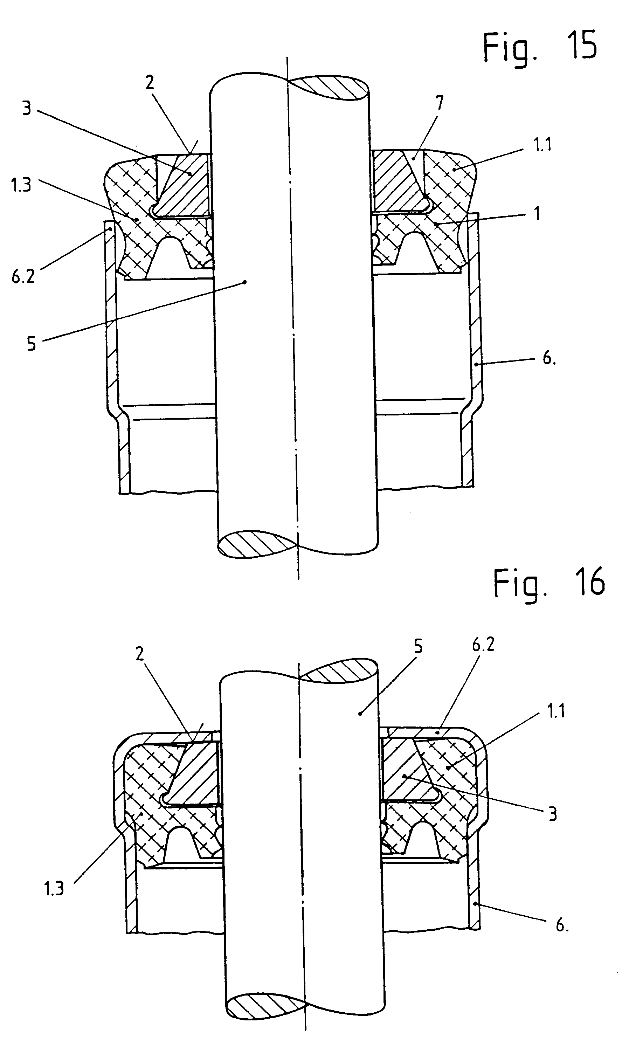

In Figur 15 wird der Beginn des Einfügens einer solchen Dichtung in den Spalt zwischen einem Gehäuse 6 und einer darin axial beweglichen Stange 5 gezeigt. Es resultiert im Anschluß die in Figur 16 gezeigte Form der Dichtung durch Umklappen des Halteabschnitts 1.1 um das gelenkartig wirkende Zwischenstück 1.3. Sie ist wiederum im Sinne der vorstehenden Darlegung dadurch gekennzeichnet, daß sich eine durchgehend flächige Anlage des Halteabschnitts 1.1 einerseits an der Außenseite des Führungsrings 3 und andererseits an der Innenseite des Gehäuses 6 ergibt. Der zunächst noch vorhandene Spalt 7 zwischen dem Halteabschnitt 1.1 und dem Führungsring 3 wird hierbei geschlossen und es resultiert eine radiale Verpressung des Halteabschnitts 1.1 zwischen den einander in radialer Richtung umschließenden, im wesentlichen unnachgiebigen Flächen des Gehäuses 6 und des Führungsrings 3. Die Dichtung 1 ist dabei in Richtung des abzudichtenden Raums 4 unverrückbar festgelegt an einer Schulter des Gehäuses 6. Das in gegengesetzter Richtung über die Dichtung überstehende Ende 6.2 wird nach dem Einfügen der Dichtung im Sinne der zu Figur 4 gemachten Aussagen radial nach innen umgelegt, bis sich eine Anlageberührung an dem Ende 2 ergibt, was eine gute Abdichtung und eine unverrückbare Festlegung der Dichtung bewirkt.

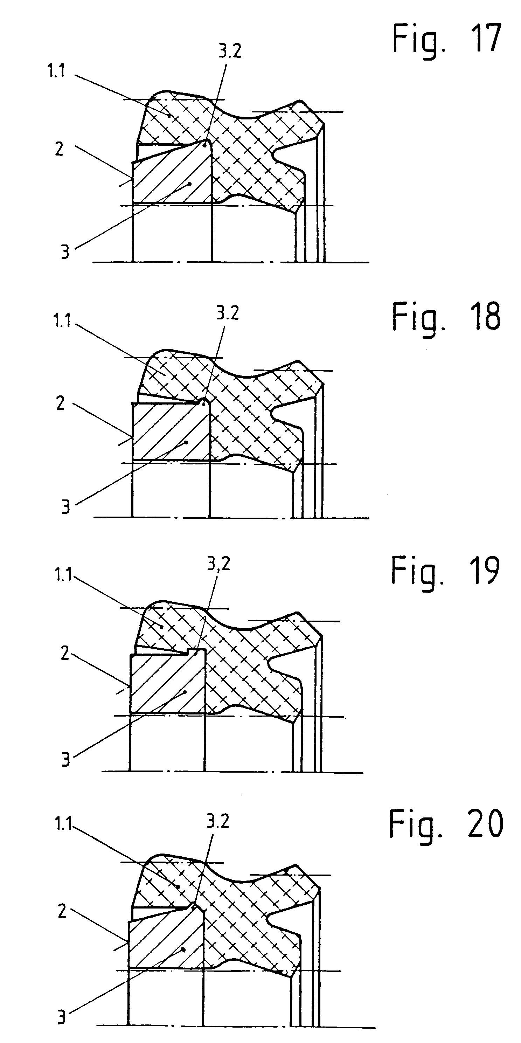

In den Figuren 17 bis 20 werden verschiedene Ausführungen von Dichtungen gezeigt, bei denen ähnlich wie bei der Ausführung nach Figur 13 im Anlieferungszustand eine Spaltbildung zwischen dem Halteabschnitt 1.1 und dem Führungsring 3 im Bereich des Endes 2 vorhanden ist. Die Spaltbildung kann auch eine Folge davon sein, daß der Führungsring 3 in gewisser Hinsicht überdimensioniert ist.

Bei der Ausführung nach Figur 17 ist der Halteabschnitt 1.1 innenseitig durch eine Zylinderfläche begrenzt und der Führungsring 3 außenseitig durch eine Kegelfläche.

Bei der Ausführung nach Figur 18 ist der Führungsring 3 außenseitig überwiegend durch eine Zylinderfläche begrenzt und der Halteabschnitt 1 innenseitig durch eine Kegelfläche, die einen sich mit zunehmender Entfernung von dem Ende 2 vermindernden Innendurchmesser hat.

Bei der Ausführung nach Figur 19 weist der Führungsring auf dem überwiegenden Teil seiner axialen Länge in dem an das Ende 2 anschließenden Bereich außenseitig eine Zylinderfläche auf, der Halteabschnitt 1.1 innenseitig eine Kegelfläche.

Bei der Ausführung nach Figur 20 ist der Halteabschnitt innenseitig durch eine Kegelfläche begrenzt, der Führungsring außenseitig im entsprechenden Bereich durch eine Kegelfläche, die ein sich mit zunehmender Entfernung von dem Ende vergrößernden Durchmesseraufweist.

Übereinstimmend ist es bei den Ausführungen nach den Figuren 17 bis 20 vorgesehen, daß der Führungsring 3 an dem von dem Ende 2 abgewandten Ende mit einem radial nach außen vorstehenden Ringansatz 3.2 versehen ist, der in eine Nut eines übereinstimmenden Profils und einer übereinstimmenden Dimensionierung des Halteabschnitts 1.1 eingreift. Der Ringansatz hat bei den Ausführungen nach den Figuren 17 und 18 ein im wesentlichen abgerundetes Profil. Sein Profil ist bei der Ausführung nach Figur 19 im wesentlichen rechteckig begrenzt und bei der Ausführung nach Figur 20 im wesentlichen keilförmig, wobei zwei Kegelflächen einander in einer gemeinsamen, radial nach außen vorstehenden Kante begrenzen.

## Patentansprüche

1. Dichtungsanordnung mit einer druckbeaufschlagbaren Dichtung, die in einem Spalt zwischen einer hin- und hergehenden Stange (5) und einem die Stange (5) in einem radialen Abstand umschließenden Gehäuse (6) angeordnet ist, bestehend aus einem in das Gehäuse (6) einfügbaren, rotationssymmetrischen Dichtring (1) aus gummielastischem Werkstoff, der an seinem mit einem Medium höheren Druckes beaufschlagten ersten Ende (8) mit wenigstens einer an die Stange (5) anlegbaren, in radialer Richtung beweglichen Dichtlippe (1.4) und an dem davon abgewandten zweiten Ende (2) mit einer in Richtung der Stange (5) und in Richtung des zweiten Endes (2) offenen Ausnehmung versehen ist, in die ein Ring eines angepaßten Profils aus zähhartem, polymerem Werkstoff eingefügt ist, wobei der Ring als Führungsring (3) ausgebildet ist und in einem Abstand von dem zweiten Ende (2) mit wenigstens einem radial nach außen weisenden Vorsprung (3.1) versehen ist, der in eine radial nach innen offene Nut der Ausnehmung einschnappbar ist, dadurch gekennzeichnet, daß der Dichtring (1) einen Halteabschnitt (1.1) aufweist, der in dem Zwischenraum zwischen dem Führungsring (3) und dem Gehäuse (6) zumindest im Bereich eines umlaufenden Dichtbandes radial verpreßt ist, daß der Halteabschnitt (1.1) ein Profil aufweist, das an zumindest einer Stelle mit einem radial nach außen weisenden Ringvorsprung (1.2) versehen ist und daß der Ringvorsprung (1.2) im Bereich der Mündung des Gehäuses (6) angeordnet ist und daß das Gehäuse (6) im Bereich seiner Mündung einen entsprechend vergrößerten Durchmesser zur Aufnahme des Ringvorsprungs (1.2) aufweist, daß die Profile des Halteabschnitts am zweiten Ende (2) und des übrigen Dichtrings (1) der Dichtlippe (1.4) am ersten Ende (8) durch ein gelenkartig wirkendes Zwischenstück (1.3) verbunden sind und daß der Ringvorsprung (1.2) in eine Nut des Gehäuses (6) eingefügt ist, die sein Profil unter radialer und axialer Vorspannung anliegend umschließt.

2. Dichtungsanordnung nach Anspruch 1, dadurch gekennzeichnet, daß der Ringvorsprung (1.2) in axialer Richtung beiderseits jeweils eine Stirnseite aufweist, die einen radial nach innen weisenden Flanschvorsprung (6.2) und eine Schulter (6.1) des Gehäuses (6) anliegend berühren.

3. Dichtungsanordnung einem der Ansprüche 1 bis 2, dadurch gekennzeichnet, daß die Nut auf der von dem druckbeaufschlagten Medium abgewandten Seite durch einen nach innen weisenden Flanschvorsprung (6.2) des Gehäuses (6) begrenzt ist und daß der Flanschvorsprung den Dichtring (1) und den Führungsring (3) zumindest teilweise mit einer Radialfläche anliegend berührt.

4. Dichtungsanordnung nach Anspruch 3, dadurch gekennzeichnet, daß der Flanschvorsprung (6.3) aus einem umgebördelten Abschnitt der Wandung des Gehäuses (6) besteht.

5. Dichtungsanordnung nach einem der Ansprüche 1 bis 4, dadurch gekennzeichnet, daß der Vorsprung (3.1) des Führungsrings einen sich mit zunehmender Entfernung von dem Ende (2) gleichmäßig vergrößernden Durchmesser hat.

6. Dichtungsanordnung nach einem der Ansprüche 1 bis 5, dadurch gekennzeichnet, daß das Dichtband den überwiegenden Teil der axialen Länge des Führungsringes (3) überdeckt.

7. Verwendung der Dichtungsanordnung nach einem der Ansprüche 1 bis 6 in einem Stoßdämpfer oder einer Gasdruckfeder.

## Claims

1. A seal arrangement having a seal which can be pressurized and is arranged in a gap between a reciprocating rod (5) and a housing (6) which surrounds the rod (5) with radial spacing, comprising a rotationally symmetrical sealing ring (1) of rubber-elastic material, which can be inserted in the housing (6) and is provided, at its first end (8), which is acted upon by a medium of higher pressure, with at least one sealing lip (1.4) which can be placed against the rod (5) and is movable in the radial direction and, at the second end (2) facing away from the said sealing lip, is provided with a recess which is open in the direction of the rod (5) and in the direction of the second end (2) and in which is inserted a ring of an adapted profile of tough, polymer material, the ring being designed as a guide ring (3) and being provided, with spacing from the second end (2), with at least one projection (3.1) pointing radially outwards, which can be snapped into a groove, which is open radially inwards, in the recess, characterized in that the sealing ring (1) has a holding section (1.1) which is pressed radially in the intermediate space between the guide ring (3) and the housing (6), at least in the region of a circumferential sealing band, in that the holding section (1.1) has a profile which is provided, at least at one point, with an annular projection (1.2) pointing radially outwards, and in that the annular projection (1.2) is arranged in the region of the mouth of the housing (6), and in that the housing (6) has, in the region of its mouth, a correspondingly enlarged diameter to receive the annular projection (1.2), in that the profiles of the holding section at the second end (2) and of the remaining sealing ring (1) of the sealing lip (1.4) at the first end (8) are connected by an intermediate piece (1.3) which acts in a hinge-like manner, and in that the annular projection (1.2) is inserted in a groove in the housing (6), which groove surrounds the profile of the latter, resting against it with radial and axial prestress.

2. A seal arrangement according to claim 1, characterized in that the annular projection (1.2) has an end face on each side in the axial direction, which end faces contact a flange projection (6.2), pointing radially inwards, and a shoulder (6.1) of the housing (6), resting against them.

3. A seal arrangement according to either of claims 1 and 2, characterized in that the groove on the side facing away from the pressurized medium is bounded by a flange projection (6.2) of the housing (6), pointing inwards, and in that the flange projection contacts the sealing ring (1) and the guide ring (3), resting against them at least partially with a radial surface.

4. A seal arrangement according to claim 3, characterized in that the flange projection (6.3) comprises a beaded section of the wall of the housing (6).

5. A seal arrangement according to any one of claims 1 to 4, characterized in that the projection (3.1) of the guide ring has a diameter which increases evenly with an increasing distance from the end (2).

6. A seal arrangement according to any one of claims 1 to 5, characterized in that the sealing band covers most of the axial length of the guide ring (3).

7. The use of the seal arrangement according to any of claims 1 to 6 in a shock damper or a gas pressure spring.

## Revendications

1. Joint d'étanchéité comportant un joint pouvant être soumis à une pression, qui est disposé dans une fente située entre une tige coulissante (5) et un boîtier (6) renfermant la tige (5) selon un écart radial, se composant d'une bague d'étanchéité (1) à symétrie de révolution en gomme élastique, pouvant être insérée dans le boîtier (6), qui est pourvue à sa première extrémité (8), soumise à un milieu de pression élevée, d'au moins une lèvre d'étanchéité (1.4) mobile dans le sens radial pouvant être mise contre la tige (5), et à sa deuxième extrémité (2) opposée à cela d'un évidement ouvert dans le sens de la tige (5) et dans le sens de la deuxième extrémité (2), dans lequel une bague d'un profil adapté en matière polymère dure est insérée, la bague étant conçue comme bague de guidage (3) et étant pourvue à une certaine distance de la deuxième extrémité (2) d'au moins une partie en saillie (3.1) s'étendant radialement vers l'extérieur, qui peut s'encliqueter dans une rainure de l'évidement ouverte radialement vers l'intérieur, caractérisé en ce que la bague d'étanchéité (1) présente un segment de support (1.1) qui est comprimé de façon radiale dans l'intervalle existant entre la bague de guidage (3) et le boîtier (6), au moins dans la zone d'une bande d'étanchéité circulaire, en ce que le segment de support (1.1) présente un profil, qui est pourvu au moins à un endroit d'une partie en saillie de bague (1.2) s'étendant radialement vers l'extérieur et en ce que la partie en saillie de bague (1.2) est disposée dans la zone d'ouverture du boîtier (6) et en ce que le boîtier (6) présente dans la zone de son ouverture un diamètre agrandi en conséquence, destiné à loger la partie en saillie de bague (1.2), en ce que le profil du segment de support est relié à la deuxième extrémité (2) et le profil de la bague d'étanchéité (1) restante de la lèvre d'étanchéité (1.4) est relié à la première extrémité (8) par une pièce intermédiaire (1.3) agissant de façon articulée et en ce que la partie en saillie de bague (1.2) est insérée dans une rainure du boîtier (6), qui entoure son profil de façon adjacente par précontrainte radiale et axiale.

2. Joint d'étanchéité selon la revendication 1, caractérisé en ce que la partie en saillie de bague (1.2) présente, dans le sens axial, des deux côtés, à chaque fois un côté frontal touchant de façon adjacente une partie en saillie de bride (6.2) s'étendant radialement vers l'intérieur et un épaulement (6.1) du boîtier (6).

3. Joint d'étanchéité selon l'une des revendications 1 à 2, caractérisé en ce que la rainure située sur le côté opposé du milieu soumis à une pression est limitée par une partie en saillie de bride (6.2) du boîtier (6) s'étendant vers l'intérieur et en ce que la partie en saillie de bride touche de façon adjacente la bague d'étanchéité (1) et la bague de guidage (3) au moins partiellement avec une surface radiale.

4. Joint d'étanchéité selon la revendication 3, caractérisé en ce que la partie en saillie de bride (6.3) se compose d'un segment rabattu de la paroi du boîtier (6).

5. Joint d'étanchéité selon l'une des revendications 1 à 4, caractérisé en ce que la partie en saillie (3.1) de la bague de guidage a un diamètre s'agrandissant régulièrement en s'éloignant de l'extrémité (2).

6. Joint d'étanchéité selon l'une des revendications 1 à 5, caractérisé en ce que la bande d'étanchéité recouvre la partie prépondérante de la longueur axiale de la bague de guidage (3).

7. Utilisation du joint d'étanchéité selon l'une des revendications 1 à 6 dans un amortisseur ou dans un ressort de pression à gaz.
